# EUROPÄISCHE PATENTSCHRIFT

(11) **EP 2 361 795 B1**
(45) Veröffentlichungstag und Bekanntmachung des Hinweises auf die Patenterteilung: **13.03.2013**
(21) Anmeldenummer: 10015756.9
(22) Anmeldetag: 17.12.2010
(51) Int. Cl.: B60G 5/04, B60G 7/02, B62D 21/11

(54) **Nutzfahrzeug mit Trägerrahmen und Doppelachskombination**
Commercial vehicle with chassis frame and tandem axle combination
Véhicule utilitaire doté d'un chassis porteur et ensenble d'essieu en tandem

(30) Priorität: 26.02.2010 DE 102010009519
(43) Veröffentlichungstag der Anmeldung: 31.08.2011
(73) Patentinhaber: MAN Truck & Bus AG, 80995 München (DE)
(72) Erfinder: Rossol, Martin, 80997 München (DE); Grabmaier, Stefan, 87700 Memmingen (DE); Hornsmann, Martin, 81541 München (DE); Schmitt, Peter, 80937 München (DE)

(56) Entgegenhaltungen:
- EP-A1- 0 914 978
- WO-A1-97/47484
- FR-A- 1 439 744
- FR-A- 1 457 199
- US-A- 2 970 848
- US-A- 4 667 974
- US-A- 5 549 320
- US-A- 5 649 719
- US-B1- 6 439 588

## Beschreibung

Die Erfindung betrifft ein Nutzfahrzeug mit einem Trägerrahmen, der aus Längsträgern und Querträgern zusammengesetzt ist und eine Doppelachskombination aufweist. An jeder der beiden Achsen der Doppelachskombination sind wenigstens ein Achslenker befestigt. Die Achslenker sind am anderen Ende jeweils an wenigstens einem Lagerbock angeschlossen, die der mittelbaren Anbindung der Achslenker an einem gemeinsamen Querträger dienen. Der Querträger umfasst wenigstens eine Wand, die sich quer zur Fahrtrichtung zwischen den Längsträgern erstreckt und mit etwa rechtwinklig zur Wand verlaufenden Stegen an den Längsträgern anliegt.

US-A-6439588, WO-A-97/47484 und US-A-554 9 320 zeigen jeweils ein Nutzfahrzeug mit einer Doppelachsaufhängung, wobei die Lagerbocke gemeinsame Anschlüsse für aufweisen, an die jeweils in und entgegen der Fahrtrichtung Dreipuntlenker anschließbar sind.

Aus der DE 198 15 776 A1 geht eine Aufhängung einer Starrachse in einem Fahrzeug, insbesondere Nutzfahrzeug wie Lastkraftwagen oder Omnibus hervor. Als Teil dieser Aufhängung kommt ein 4-Punkt-Stabilisatorlenker zur Anwendung, der sich wie folgt darstellt. Der 4-Punkt-Stabilisatorlenker ist auf drei Funktionen ausgelegt, nämlich Längskraftaufnahme, Seitenkraftaufnahme und Wankstabilisierung. Er ist durch ein einstückiges Gesenkschmiedteil gebildet und weist gekreuzte Arme auf, die in einer Ebene angeordnet sind und in einem Kreuzzentralbereich ineinander übergehen. Die gekreuzten Arme des 4-Punkt-Stabilisatorlenkers sind weitgehend nach Art von Parabelfedern entsprechend einem Biegeträger gleicher Festigkeit bzw. gleicher Randspannung ausgelegt. Sie weisen beiderseits eines, den dicksten Teil darstellenden Kreuzzentralbereichs in den betreffenden Armabschnitten einen im Wesentlichen rechteckigen Querschnitt auf. Die Konstruktion ist verhältnismäßig aufwändig und somit auch teuer. Wünschenswert wäre es daher, eine konstruktiv einfachere und Gewicht sparendere Fertigungsweise zu finden, die auch für Nutzfahrzeuge mit Doppelachskombinationen verwendbar ist.

Die Aufgabe wird erfindungsgemäß dadurch gelöst, dass der Körper des Lagerbocks jeweils quer zur Fahrtrichtung in die Wand des Querträgers hineinragt und gemeinsame Anschlüsse für Achslenker aufweist, an die jeweils in und entgegen der Fahrtrichtung 3-Punkt-Lenker und/oder 4-Punkt-Lenker anschließbar sind.

Das erfindungsgemäße Nutzfahrzeug hat einen Trägerrahmen, der aus zwei parallel verlaufenden Längsträgern und mehreren die Längsträger verbindenden Querträgern besteht. Zum Einsatz in schweren Nutzfahrzeugen wie Lastkraftwagen oder Omnibussen ist im hinteren Bereich des Trägerrahmens eine Doppelachskombination vorgesehen. Dabei ist eine angetriebene Achse mit einer nicht angetriebenen Vorlaufachse oder einer nicht angetriebenen Nachlaufachse kombiniert. Statt einer einzigen angetriebenen Achse können an dem erfindungsgemäßen Fahrzeug auch zwei angetriebene Achsen eingesetzt werden. Zwischen den beiden Achsen der Doppelachskombination ist ein quer zu den Längsträgern verlaufender Querträger angeordnet. Jede der beiden Doppelachsen steht mit dem gemeinsamen Querträger über wenigstens einen Achslenker in Verbindung. Die Achslenker können dabei z. B. ein 3-Punkt-Lenker oder ein 4-Punkt-Lenker sein. Es ist denkbar, zwei 3-Punkt-Lenker oder aber zwei 4-Punkt-Lenker miteinander zu kombinieren oder aber einen 4-Punkt-Lenker mit einem 3-Punkt-Lenker. Vorzugsweise ist die angetriebene Achse der Doppelachskombination mit dem gemeinsamen Querträger über einen 4-Punkt-Lenker verbunden. Zur mittelbaren Anbindung der Achslenker am Trägerrahmen sind an den beiden, den Längsträgern zugewandten Enden des gemeinsamen Querträgers Lagerböcke vorgesehen. Die Lagerböcke sind am Querträger und/oder am jeweiligen Längsträger anbringbar. Es ist jedoch auch vorstellbar, den Lagerbock zwischen den Querträger und den Längsträger zu positionieren. Die Form des Querträgers ist beliebig wählbar. Der Querträger kann z. B. die Form eines Hohlprofils mit einer umlaufenden Seitenwand annehmen, er kann aber auch eine senkrecht zu den Längsträgern verlaufende Wand aufweisen, die an ihrer Ober- und an ihrer Unterkante jeweils eine quer zur Wand verlaufende Schulter aufweist. Grundsätzlich ist auch jede andere Form eines Querträgers denkbar, bei der eine Wand vorgesehen ist, die die beiden Längsträger quer zur Fahrtrichtung verbindet. Im Weiteren wird von einem U-förmigen Querträger ausgegangen, der eine Wand aufweist, die die beiden Längsträger verbindet und die relativ zur Fahrtrichtung senkrecht verläuft. Zur Anlage an den Längsträgern weist der Querträger senkrecht zur Wand verlaufende Stege auf. Zur Gewichtsreduktion können die Wand und die Stege Durchbrüche aufweisen. An wenigstens einem, einem Längsträger zugewandten Ende des Querträgers ist ein Lagerbock angeordnet, der erfindungsgemäß am jeweiligen Steg des Querträgers befestigt ist. Der Lagerbock weist dabei wenigstens zwei Anschlüsse zur Anbindung der Achslenker auf. Die Anschlüsse verlaufen jeweils in und/oder entgegen der Fahrtrichtung. Vorstellbar ist, auf jeder Seite des Lagerbocks je zwei Anschlüsse vorzusehen, um eine mittelbare Verbindung zwischen den jeweiligen Längsträgern und den beiden Achsen der Doppelachskombination herzustellen. An ihren, den Längsträgern zugewandten Enden weist die Wand des Querträgers Aussparungen auf, in die die Anschlüsse der Lagerböcke frei hineinragen. Die Anschlüsse verlaufen dabei bogenförmig in- oder entgegen der Fahrtrichtung. Erfindungsgemäß sind somit in Fahrtrichtung und entgegen der Fahrtrichtung auf beiden Seiten der Wand des Querträgers bis zu acht Anschlüsse zur Anbindung von je zwei 4-Punkt-Lenkern, einem 4-Punkt-Lenker und einem 3-Punkt-Lenker oder zwei 3-Punkt-Lenkern vorgesehen.

Nach einer anderen Ausführungsform der Erfindung weist der Lagerbock einen Fuß auf, der der flächigen Anlage an dem Steg des Querträgers und/oder an dem Längsträger dient. Auf jeder Längsträgerseite hat der Lagerbock für die Anschlüsse in und entgegen der Fahrtrichtung dadurch einen gemeinsamen Fuß. Der Fuß dient zur Abstützung der Anschlüsse am Trägerrahmen und der Krafteinleitung der Achslenker in den Trägerrahmen.

Eine weitere Ausführungsform der Erfindung sieht vor, dass die Anschlüsse quer zur Fahrtrichtung gewinkelt am Fuß angeordnet sind und bogenförmig in einem Winkel zur Längsachse des Längsträgers verlaufen. Hierdurch ist es möglich, die Lagerböcke ins Innere des Trägerrahmens zwischen die beiden Längsträger zu verlagern und sie somit vor Beschädigung zu schützen. Die Anschlüsse können in einem Winkel zur Längsachse des Längsträgers in einer gedachten und durch die Längsträger verlaufenden Ebene angeordnet sein. Gleichfalls können die Anschlüsse jedoch auch in einem Winkel zur gedachten Ebene verlaufen.

In einer zusätzlichen Ausführungsform der Erfindung sind zwei Querträger quer zur Fahrbahn gesehen nebeneinander angeordnet und über die benachbarten Wände miteinander verbunden. Die beiden nebeneinander verlaufenden Querträger bilden somit den erfindungsgemäßen gemeinsamen Querträger. Hierdurch ist eine höhere Stabilität des Trägerrahmens erzielbar.

Zusätzlich ist denkbar, zwei Querträger quer zur Fahrtrichtung gesehen nebeneinander anzuordnen. Jeder Querträger kann dabei über eine separate Querträgerwand verfügen, wobei die Wände Rücken an Rücken aneinander liegen. Die beiden neben einander angeordneten Querträger können auch über eine gemeinsame Wand mit einander verbunden sein..

In einer anderen Ausführungsform der Erfindung verfügen die beiden nebeneinander angeordneten Querträger an ihren, den jeweiligen Längsträgern zugewandten Enden jeweils über einen gemeinsamen Lagerbock. Der gemeinsame Lagerbock ragt dabei in die Wand des Querträgers hinein und bildet jeweils in und entgegen der Fahrtrichtung Anschlüsse zur Anbindung der Achslenker. Die Lenkeranbindung kann dabei symmetrisch verlaufen, so dass zwei 3-Punkt-Lenker und/oder zwei 4-Punkt-Lenker miteinander verbunden sind. Eine asymmetrische Lenkeranbindung aus der Kombination eines 3-Punkt-Lenkers mit einem 4-Punkt-Lenker sind in gleicher Weise denkbar. Der Lagerbock kann dabei ein Gussteil sein oder ein Blechbiegeteil. Gleichfalls ist eine Kombination eines Gussteils mit einem Blechbiegeteil möglich.

Weitere vorteilhafte Beispiele und Ausführungsformen sind anhand der nachstehenden Zeichnungen entnehmbar. Hierbei zeigen:
- Fig. 1: den erfindungsgemäßen Querträger in perspektivischer Darstellung,
- Fig. 2: den gemeinsamen Querträger zusammengesetzt aus zwei einzelnen Querträgern in Draufsicht,
- Fig. 3: den gemeinsamen Querträger entsprechend Fig. 2 in perspektivischer Gesamtdarstellung,
- Fig. 4: in explosionsartiger Darstellung den gemeinsamen Querträger entsprechend Fig. 2 mit den dazugehörigen Lagerböcken,
- Fig. 5: die erfindungsgemäße Doppelachskombination mit zwei 4-Punkt-Lenkern im verbauten Zustand,
- Fig. 6: in perspektivischer Darstellung den erfindungsgemäßen Querträger mit zwei angeschlossenen 4-Punkt-Lenkern,
- Fig. 7: im verbautem Zustand den erfindungsgemäßen Querträger mit einem 3-Punkt-Lenker und einem 4-Punkt-Lenker.

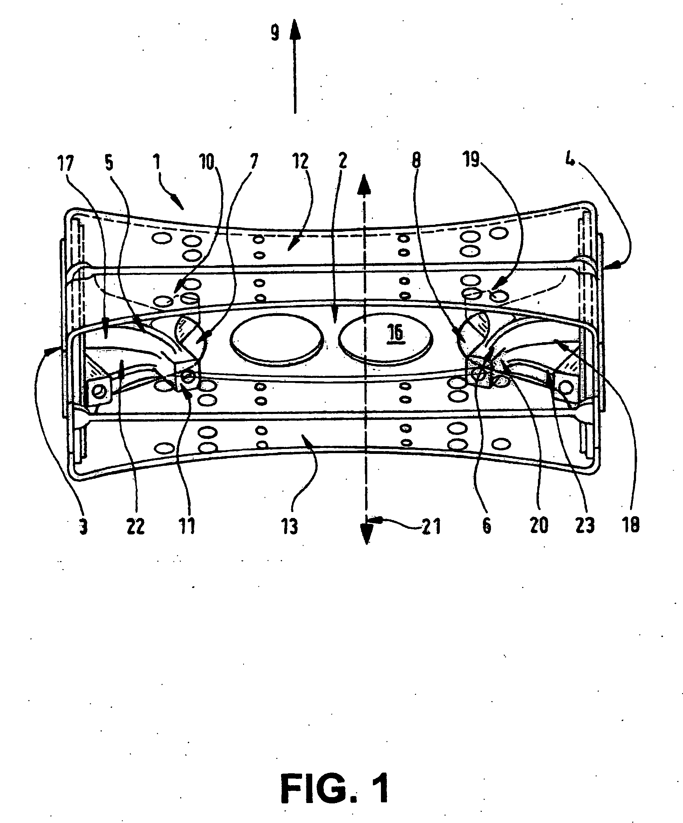

Fig. 1 zeigt in perspektivischer Darstellung den erfindungsgemäßen Querträger 1 mit der Wand 2 und den Stegen 3 und 4. Die Lagerböcke 5 und 6 ragen in die Ausnehmungen 7 und 8 der Wand 2 hinein. In und entgegen der Fahrtrichtung 9 weisen die Lagerböcke 5; 6 Anschlüsse 10; 11; 19; 20 auf. Rechtwinklig zur Wand 2 weist der Querträger 1 Schultern 12 und 13 auf. Die Wand 2 besitzt zur Gewichtserleichterung Durchbrüche 16. Die in Fig. 1 gezeigten Lagerböcke 5 und 6 haben jeweils einen Fuß 17 und 18. Die Füße 17; 18 liegen in Bezug zu den Längsträgern 14 und 15 an der Innenseite der Stege 3 und 4 an. Die Anschlüsse 10; 11 ; 19; 20 verlaufen bogenförmig von den Füßen 17 und 18 weg in der Ebene 21 der Längsträger 14 und 15. Über die Rippen 22 und 23 stützen sich die Anschlüsse 10; 11; 19 und 20 an den Füßen 17 und 18 ab.

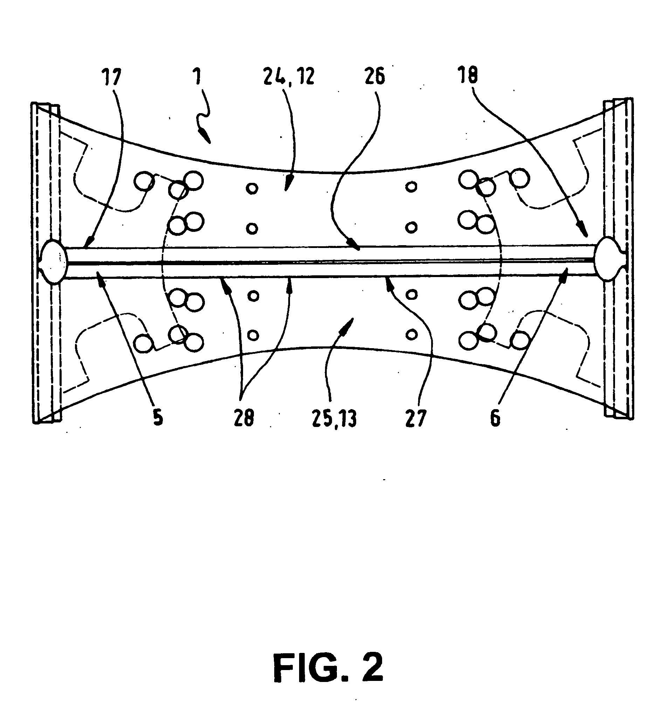

Fig. 2 zeigt in Draufsicht einen gemeinsamen Querträger 1 mit den beiden Querträgerhälften 24 und 25. Beide Querträgerhälften 24 und 25 haben aneinander anliegende Wände 26 und 27, die miteinander in den Punkten 28 verbunden sind. Die Füße 17 und 18 der Lagerböcke 5 und 6 verlaufen in Fig. 2 in etwa parallel zu den Schultern 12 und 13 der Querträgerhälften 24 und 25.

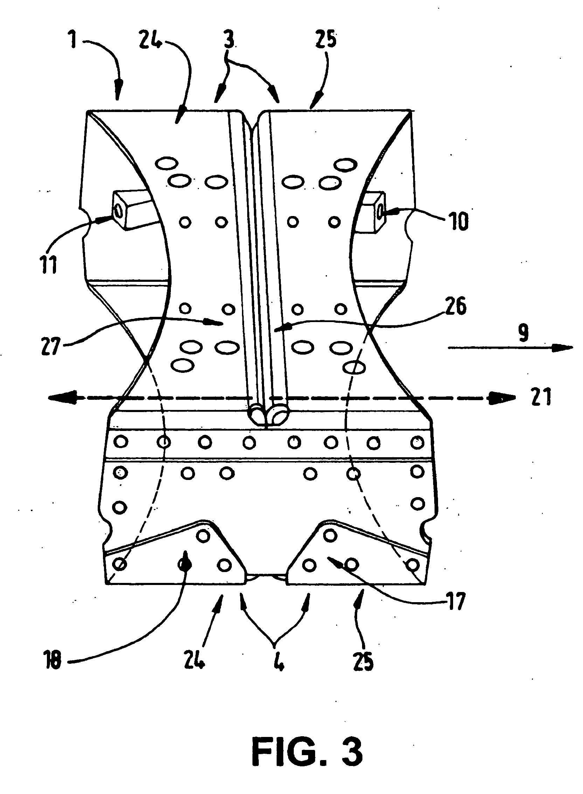

Fig. 3 zeigt in perspektivischer Darstellung den gemeinsamen Querträger 1 mit zwei miteinander verbundenen Querträgerhälften 24 und 25, die über je zwei Wände 26 und 27 verfügen. Die Füße 17 und 18 der Querträgerhälften 24 und 25 liegen an den Stegen 3 und 4 der Querträgerhälften 24 und 25 an. In Fahrtrichtung 9 zu beiden Seiten ragen die Anschlüsse 10 und 11 bzw. 19 und 20 seitlich aus den Querträgerhälften 24 und 25 heraus. Die Anschlüsse 10; 11; 19; 20 verlaufen dabei bogenförmig zu den Längsträgern 14; 15 (nicht gezeigt) in der Ebene 21 der Längsträger.

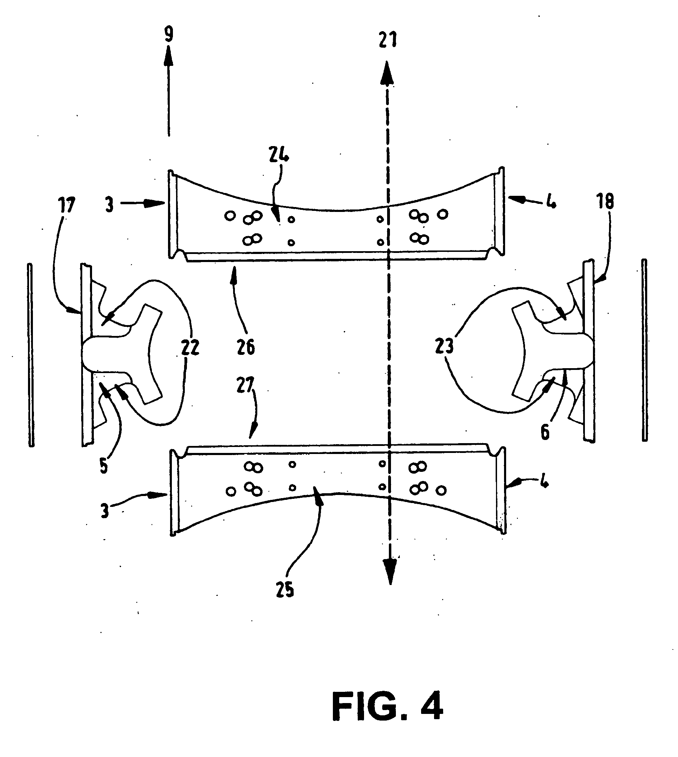

Fig. 4 zeigt in Explosionsdarstellung die beiden Querträgerhälften 24 und 25 mit ihren Wänden 26 und 27 und den Stegen 3 und 4. Die Lagerböcke 5 und 6 sind in der Fig. 4 zwischen den Querträgerhälften 24 und 25 dargestellt und weisen je einen Fuß 17 und 18 auf. In der Ebene 21 der Längsträger ragen die Rippen 22 und 23 aus den Füßen 17 und 18 heraus und verlaufen relativ zu den Füßen 17 und 18 rechtwinklig und in einem Bogen in und entgegen der Fahrtrichtung 9.

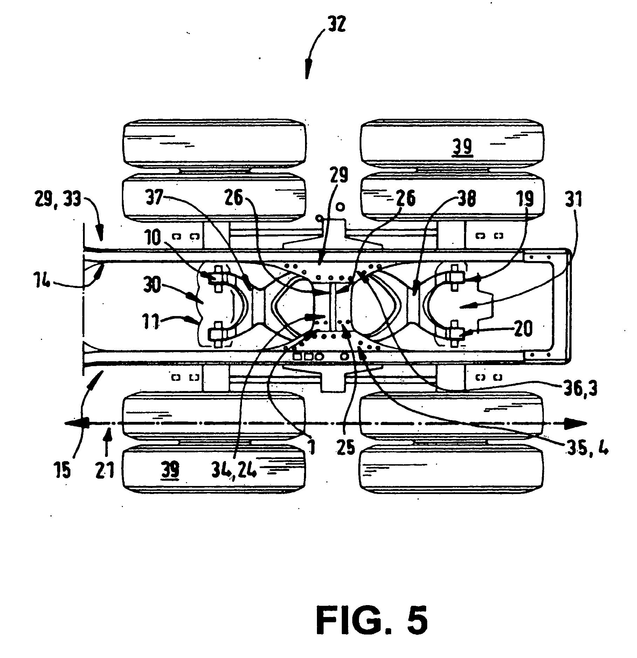

Fig. 5 zeigt in Draufsicht das Nutzfahrzeug 29 mit den beiden Achsen 30 und 31 der Doppelachskombination 32. Der Trägerrahmen 33 des Nutzfahrzeugs 29 umfasst dabei die Längsträger 14 und 15 und den gemeinsamen Querträger 1. Der Querträger 1 der Fig. 5 weist dabei einen Mittelteil 34 sowie die beiden Endstücke 35 und 36 auf. Der Mittelteil 34 umfasst dabei die Querträgerhälften 24 und 25 mit einer gemeinsamen Wand 26. An den Mittelteil 34 schließen sich in Richtung der Längsträger 14 und 15 die beiden Endstücke 35 und 36 an, die die Stege 3 und 4 aufweisen, mit denen der Querträger 1 jeweils zu beiden Seiten an den Längsträgern 14 und 15 anliegt. Die beiden Lagerböcke 5 und 6 sind in der Darstellung der Fig. 5 von den Endstücken 35 und 36 verdeckt. Die beiden 4-Punkt-Lenker 37 und 38 greifen an den Anschlüssen 10; 11; 19; 20 an und erstrecken sich jeweils in Richtung auf die Achsen 30 und 31 der Doppelachskombination 32. Die beiden Achsen 30 und 31 sind jeweils angetriebene Achsen, die zu beiden Seiten der Längsträger 14 und 15 die Räder 39 tragen. In der Fig. 5 ist dargestellt, dass die beiden 4-Punkt-Lenker 37 und 38 nicht in der Ebene 21 der Längsträger verlaufen, sondern in Richtung auf die Achsen 30 und 31 hin schräg nach unten ausgerichtet sind.

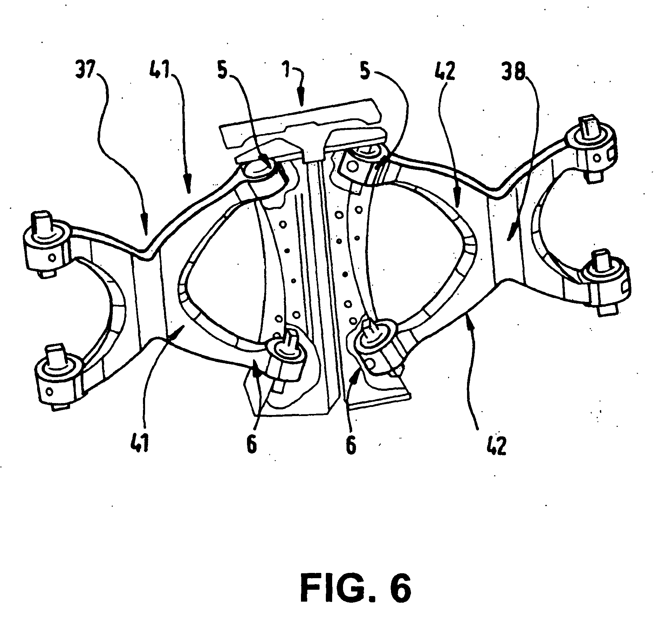

Fig. 6 zeigt einen senkrecht stehenden gemeinsamen Querträger 1 in perspektivischer Gesamtdarstellung. Abragend vom gemeinsamen Querträger 1 sind zwei 4-Punkt-Lenker 37; 38 dargestellt. Die beiden 4-Punkt-Lenker 37; 38 sind über die Lagerböcke 5; 6 mittelbar an den Längsträgern 14 und 15 (nicht gezeigt) angebunden. Die Arme 41 und 42 der 4-Punkt-Lenker 37 und 38 sind jeweils an den Lagerböcken 5 und 6 des Querträgers 1 angelenkt.

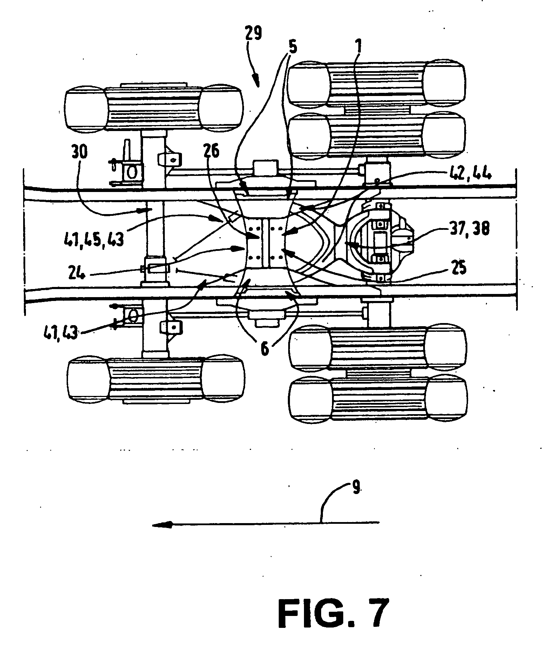

Fig. 7 zeigt entsprechend der Fig. 5 ein Nutzfahrzeug 29 mit je einem 3-Punkt-Lenker 45 in Kombination mit einem 4-Punkt-Lenker 37; 38. In der Darstellung der Fig. 7 ist die Achse 30, die mit dem 3-Punkt-Lenker 45 verbunden ist, eine nicht angetriebene Vorlaufachse. Zu erkennen sind der Querträger 1 mit zwei Querträgerhälften 24 und 25 und eine gemeinsame Wand 26 sowie die Lagerböcke 5 und 6. Zu beiden Seiten in und entgegen der Fahrtrichtung 9 sind an den Lagerböcken 5; 6 je ein 3-Punkt-Lenker 45 und ein 4-Punkt-Lenker 37 angelenkt. Hierbei greifen die Hände 43; 44 der Arme 41; 42 der beiden Lenker 37; 45 an den Lagerböcken 5; 6 an.

### Bezugsziffernliste:

- 1: Querträger
- 2: Wand
- 3: Steg
- 4: Steg
- 5: Lagerbock
- 6: Lagerbock
- 7: Ausnehmung
- 8: Ausnehmung
- 9: Fahrtrichtung
- 10: Anschlüsse
- 11: Anschlüsse
- 12: Schulter
- 13: Schulter
- 14: Längsträger
- 15: Längsträger
- 16: Durchbruch
- 17: Fuß
- 18: Fuß
- 19: Anschluss
- 20: Anschluss
- 21: Ebene der Längsträger
- 22: Rippen
- 23: Rippen
- 24: Querträgerhälfte
- 25: Querträgerhälfte
- 26: Wand
- 27: Wand
- 28: Verbindungspunkt
- 29: Nutzfahrzeug
- 30: Achse
- 31: Achse
- 32: Doppelachskombination
- 33: Trägerrahmen
- 34: Mittelteil
- 35: Endstück
- 36: Endstück
- 37: 4-Punkt-Lenker
- 38: 4-Punkt-Lenker
- 39: Rad
- 40: freibleibend
- 41: Arm
- 42: Arm
- 43: Hand
- 44: Hand
- 45: 3-Punkt-Lenker

## Patentansprüche

1. Nutzfahrzeug mit einem Trägerrahmen, der aus Längsträgern (14; 15) und Querträgern (1) zusammengesetzt ist und mit einer Doppelachskombination (32), wobei an jeder der beiden Achsen (30; 31) wenigstens ein Achslenker (37; 38; 45) befestigt sind, die anderen Endes jeweils an wenigstens einem Lagerbock (5, 6) angeschlossen sind, die der mittelbaren Anbindung der Achslenker (37; 38; 45) an einem gemeinsamen Querträger (1) dienen, wobei der Querträger (1) wenigstens eine Wand (26; 27) umfasst, die sich quer zur Fahrtrichtung (9) zwischen den Längsträgern (14; 15) erstreckt und mit etwa rechtwinklig zur Wand (2; 26; 27) verlaufenden Stegen (3; 4) an den Längsträgern (14, 15) anliegt, **dadurch gekennzeichnet, dass** der Körper des Lagerbocks (5; 6) jeweils quer zur Fahrtrichtung (9), in die Wand (2; 26; 27) des Querträgers (1) hineinragt und gemeinsame Anschlüsse (19; 20) für Achslenker (37; 38; 45) aufweist, an die jeweils in und entgegen der Fahrtrichtung (9) Dreipunktlenker (45) und/oder Vierpunktlenker (37; 38) anschließbar sind.

2. Nutzfahrzeug nach Anspruch 1, **dadurch gekennzeichnet, dass** der Lagerbock (5; 6) eine Fuß (17; 18) aufweist, der der flächigen Anlage an dem Steg (4) des Querträgers (1) und/oder dem Längsträger (14; 15) dient.

3. Nutzfahrzeug nach Anspruch 1, **dadurch gekennzeichnet, dass** die Anschlüsse (19; 20) quer zur Fahrtrichtung (9), gewinkelt am Fuß (17; 18) angeordnet sind.

4. Nutzfahrzeug nach Anspruch 1, **dadurch gekennzeichnet, dass** die Anschlüsse (19; 20) in einem Winkel zur Längsachse des Längsträgers (14; 15) verlaufen.

5. Nutzfahrzeug nach Anspruch 1, **dadurch gekennzeichnet, dass** zwei Querträger (1) quer zur Fahrtrichtung (9) gesehen neben einander angeordnet sind und über die benachbarten Wände (2; 26; 27) mit einander verbunden sind.

6. Nutzfahrzeug nach Anspruch 1, **dadurch gekennzeichnet, dass** zwei Querträger (1) quer zur Fahrtrichtung (9) gesehen neben einander angeordnet sind und über eine gemeinsame Wand (2; 26; 27) verfügen.

7. Nutzfahrzeug nach einem der Ansprüche 5 oder 6, **dadurch gekennzeichnet, dass** die beiden neben einander angeordneten Querträger (1) an ihren, den jeweiligen Längsträgern (14; 15) zugewandten Enden jeweils über einen gemeinsamen Lagerbock (5; 6) verfügen.

## Claims

1. Commercial vehicle having a supporting frame which is composed of longitudinal carriers (14; 15) and transverse carriers (1), and having a tandem axle combination (32), at least one axle guide (37; 38; 45) being fastened to each of the two axles (30; 31), which at least one axle guide (37; 38; 45) is connected in each case at the other end to at least one bearing block (5, 6) which serves to connect the axle guides (37; 38; 45) indirectly to a common transverse carrier (1), the transverse carrier (1) comprising at least one wall (26; 27) which extends between the longitudinal carriers (14; 15) transversely with respect to the driving direction (9) and bears against the longitudinal carriers (14, 15) by way of webs (3; 4) which run at approximately right angles to the wall (2; 26; 27), **characterized in that** the body of the bearing block (5; 6) protrudes, in each case transversely with respect to the driving direction (9), into the wall (2; 26; 27) of the transverse carrier (1) and has common connections (19; 20) for axle guides (37; 38; 45), to which three-point links (45) and/or four-point links (37; 38) can be connected in each case in and counter to the driving direction (9).

2. Commercial vehicle according to Claim 1, **characterized in that** the bearing block (5; 6) has a foot (17; 18) which serves for planar bearing against the web (4) of the transverse carrier (1) and/or the longitudinal carrier (14; 15).

3. Commercial vehicle according to Claim 1, **characterized in that** the connections (19; 20) are arranged such that they are angled at the foot (17; 18), transversely with respect to the driving direction (9).

4. Commercial vehicle according to Claim 1, **characterized in that** the connections (19; 20) run at an angle with respect to the longitudinal axis of the longitudinal carrier (14; 15).

5. Commercial vehicle according to Claim 1, **characterized in that**, as viewed transversely with respect to the driving direction (9), two transverse carriers (1) are arranged next to one another and are connected to one another via the adjacent walls (2; 26; 27).

6. Commercial vehicle according to Claim 1, **characterized in that**, as viewed transversely with respect to the driving direction (9), two transverse carriers (1) are arranged next to one another and have a common wall (2; 26; 27).

7. Commercial vehicle according to either of Claims 5 and 6, **characterized in that**, at their ends which face the respective longitudinal carriers (14; 15), the two transverse carriers (1) which are arranged next to one another in each case have a common bearing block (5; 6).

## Revendications

1. Véhicule utilitaire comprenant un châssis porteur qui est constitué de longerons (14 ; 15) et de traverses (1) et comprenant une combinaison d'essieu en tandem (32), au moins un bras de liaison d'essieu (37 ; 38 ; 45) étant fixé sur chacun des deux essieux (30 ; 31), étant raccordé à l'autre extrémité à chaque fois à au moins un coussinet (5, 6) et servant à relier de manière indirecte le bras de liaison d'essieu (37 ; 38 ; 45) à une traverse commune (1), la traverse (1) comprenant au moins une paroi (26 ; 27) qui s'étend transversalement à la direction de conduite (9) entre les longerons (14 ; 15) et qui s'applique avec des nervures (3 ; 4) s'étendant approximativement à angle droit par rapport à la paroi (2 ; 26 ; 27) contre les longerons (14, 15), **caractérisé en ce que** le corps du coussinet (5 ; 6) pénètre à chaque fois transversalement à la direction de conduite (9) dans la paroi (2 ; 26 ; 27) de la traverse (1) et présente des raccords (19 ; 20) communs pour les bras de liaison d'essieu (37 ; 38 ; 45), auxquels peuvent se raccorder à chaque fois dans la direction de conduite (9) et dans la direction opposée, des bras de liaison à trois points (45) et/ou des bras de liaison à quatre points (37 ; 38).

2. Véhicule utilitaire selon la revendication 1, **caractérisé en ce que** le coussinet (5 ; 6) présente une base (17 ; 18) qui sert à l'application à plat sur la nervure (4) de la traverse (1) et/ou sur le longeron (14 ; 15).

3. Véhicule utilitaire selon la revendication 1, **caractérisé en ce que** les raccords (19 ; 20) sont disposés transversalement à la direction de conduite (9), suivant un coude au niveau de la base (17 ; 18).

4. Véhicule utilitaire selon la revendication 1, **caractérisé en ce que** les raccords (19 ; 20) s'étendent suivant un angle par rapport à l'axe longitudinal du longeron (14 ; 15).

5. Véhicule utilitaire selon la revendication 1, **caractérisé en ce que** deux traverses (1) sont disposées l'une à côté de l'autre, vu transversalement à la direction de conduite (9), et sont connectées l'une à l'autre par le biais des parois adjacentes (2 ; 26 ; 27),

6. Véhicule utilitaire selon la revendication 1, **caractérisé en ce que** deux traverses (1) sont disposées l'une à côté de l'autre, vu transversalement à la direction de conduite (9), et disposent d'une paroi commune (2 ; 26 ; 27).

7. Véhicule utilitaire selon l'une quelconque des revendications 5 ou 6, **caractérisé en ce que** les deux traverses (1) disposées l'une à côté de l'autre disposent, à leurs extrémités tournées vers les longerons respectifs (14 ; 15), à chaque fois d'un coussinet commun (5 ; 6).
